# EUROPÄISCHE PATENTSCHRIFT

(11) **EP 4 098 506 B1**
(45) Veröffentlichungstag und Bekanntmachung des Hinweises auf die Patenterteilung: **06.09.2023**
(21) Anmeldenummer: 22171557.6
(22) Anmeldetag: 04.05.2022
(51) Int. Cl.: B61D 17/22, B61G 5/10, B60D 5/00

(54) **ÜBERGANG ZWISCHEN ZWEI FAHRZEUGTEILEN MIT EINER ELEKTRISCHEN VERBINDUNGSEINRICHTUNG**
TRANSITION BETWEEN TWO VEHICLE PARTS WITH AN ELECTRICAL CONNECTION DEVICE
TRANSITION ENTRE DEUX PARTIES DE VÉHICULE DOTÉE D'UN DISPOSITIF DE CONNEXION ÉLECTRIQUE

(30) Priorität: 02.06.2021 DE 102021205651
(43) Veröffentlichungstag der Anmeldung: 07.12.2022
(73) Patentinhaber: Hübner GmbH & Co. KG, 34123 Kassel (DE)
(72) Erfinder: Heiwig, Matthias, 34286 Spangenberg (DE); Demuth, Mario, 36211 Alheim (DE)

(56) Entgegenhaltungen:
- EP-B1- 1 864 833
- WO-A1-2016/150852
- DE-A1-102010 011 903
- US-A- 2 931 317
- US-A1- 2011 272 915

## Beschreibung

Die Erfindung betrifft einen Übergang zur Anordnung zwischen zwei beweglich miteinander verbundenen Fahrzeugteilen, insbesondere eines Busses oder eines Schienenfahrzeugs, aufweisend wenigstens einen an einen Fahrzeugteil anordenbaren Balg, der einen Durchgangsbereich definiert und an dem stirnseitig ein Kuppelrahmen angeordnet ist, wobei eine elektrische Verbindungseinrichtung mit wenigstens einem Verbindungsmittel und wenigstens einem Gegenverbindungsmittel zur lösbaren elektrischen Verbindung der beiden Fahrzeugteile vorgesehen ist.

### STAND DER TECHNIK

Werden zwei Fahrzeugteile eines Busses oder eines Schienenfahrzeuges miteinander verbunden, so bildet der Übergang zwischen den Fahrzeugteilen den Passagieren die Möglichkeit, auch während der Fahrt den Aufenthalt zwischen den Fahrzeugteilen zu wechseln, indem der Durchgangsbereich innerhalb des Balges mit dem Kuppelrahmen für Personen begehbar ist. Neben der Schaffung eines begehbaren Übergangs und einer mechanischen Verbindung zwischen den Fahrzeugteilen mittels einer Kupplung sind elektrische Verbindungen zwischen den Fahrzeugteilen notwendig, die so eingerichtet sein müssen, dass die Bewegung zwischen den Fahrzeugteilen die elektrische Verbindungseinrichtung nicht beeinträchtigt. Werden die Fahrzeugteile voneinander gelöst, so muss die elektrische Verbindungseinrichtung ebenfalls gelöst werden.

Beispielsweise ist aus dem Dokument DE 10 2005 032 218 A1 ein Übergang zwischen zwei Fahrzeugteilen eines Busses bekannt, bei dem die elektrische Verbindungseinrichtung deckenseitig integriert ist in einem Zwischenraum zwischen einem äußeren Balg und einer innenseitigen Balgbrücke. Die elektrischen Leitungen der Verbindungseinrichtung bilden einen 180°-Bogen, wobei sich der Krümmungsradius der elektrischen Leitungen ändert, sofern sich die Fahrzeugteile zueinander bewegen, wie es beispielsweise bei einer Kurvenfahrt geschieht.

Aus dem Dokument EP 3 386 832 B1 ist ein Übergang zwischen zwei beweglich verbundenen Fahrzeugteilen eines Schienenfahrzeuges bekannt, bei dem eine elektrische Verbindungseinrichtung in Form einer Kabelführung deckenseitig zwischen den Fahrzeugteilen angeordnet ist. Die Kabelführung besteht aus einer Gliederkette, durch die hindurch die elektrischen Leitungen geführt werden. Werden die Fahrzeugteile voneinander getrennt, so muss an wenigstens einem der beiden Fahrzeugteile auch eine Trennung der elektrischen Verbindungseinrichtung mit den elektrischen Leitungen erfolgen, beispielsweise in Form einer lösbaren elektrischen Kupplung.

Das Dokument EP 1 864 833 B1 offenbart einen Übergang zur Anordnung zwischen zwei beweglich miteinander verbundenen Fahrzeugteilen eines mehrgliedrigen Busses, wobei an den Fahrzeugteilen jeweils ein Balg mit einem stirnseitig angebrachten Kuppelrahmen angeordnet ist. Die Kuppelrahmen sind mit einem Montagerahmen verbunden, und der Montagerahmen umschließt den Kuppelrahmen außenseitig. An einer deckenseitigen Position ist eine Versorgungskupplung an jedem der sich gegenüberliegenden Montagerahmen angebracht. Werden die Kuppelrahmen der jeweiligen Fahrzeugteile miteinander verbunden, so kann eine elektrische Verbindung von Fahrzeugteil zu Fahrzeugteil hergestellt werden. Nachteilhafterweise ist die elektrische Verbindungseinrichtung außerhalb des Kuppelrahmens angeordnet und damit der Witterung ausgesetzt. Ein weiterer Nachteil besteht darin, dass das Verbindungsmittel vom Gegenverbindungsmittel der elektrischen Verbindungseinrichtung nur mit einem Entkuppeln der Kuppelrahmen der Fahrzeugteile voneinander gelöst werden kann. Bei bestehender Kupplung zwischen den Kuppelrahmen kann die elektrische Verbindung nicht getrennt werden.

Weitere Übergänge zwischen zwei Fahrzeugteilen mit einer elektrischen Verbindungseinrichtung sind beispielsweise aus der US 2 931 317 A und der US 2011/272915 A1 bekannt.

### OFFENBARUNG DER ERFINDUNG

Die Aufgabe der Erfindung besteht in der Verbesserung eines Übergangs zwischen zwei beweglich miteinander verbundenen Fahrzeugteilen, aufweisend eine elektrische Verbindungseinrichtung mit einem Verbindungsmittel und mit einem Gegenverbindungsmittel, wobei die elektrische Verbindungseinrichtung vor Witterung geschützt eingerichtet sein soll. Insbesondere soll die elektrische Verbindungseinrichtung unabhängig vom Verbindungszustand der Kuppelrahmen zueinander oder eines Kuppelrahmens an einer Stirnseite eines Fahrzeugteils lösbar ausgeführt sein.

Diese Aufgabe wird gelöst durch einen Übergang mit den Merkmalen des Anspruches 1 sowie durch ein Fahrzeug gemäß Anspruch 11 mit den jeweils kennzeichnenden Merkmalen und abhängigen Ansprüchen.

Kerngedanke der Erfindung ist die Unterbringung wenigstens des Verbindungsmittels und/oder des Gegenverbindungsmittels der elektrischen Verbindungseinrichtung innerhalb des von dem Kuppelrahmen umschlossenen Bereichs und somit innerhalb des Durchgangsbereich des Übergangs. Ein zweiter wesentlicher Aspekt der Erfindung ist die Anordnung des Verbindungsmittels und/oder des Gegenverbindungsmittels an dem Kuppelrahmen selbst.

Erfindungsgemäß ist das Verbindungsmittel und/oder das Gegenverbindungsmittel entsprechend auf einer dem Durchgangsbereich zugewandten Innenseite des Kuppelrahmens angeordnet.

Ein Kuppelrahmen ist dabei üblicherweise dazu vorgesehen, um den Balg auf einfache Weise mit dem gegenüberliegenden Fahrzeugteil bzw. mit einem weiteren Balg bzw. mit daran angeordneten komplementären Kuppelrahmen verbinden zu können. Details zu dem Kuppelrahmen und die Art und Weise der Verbindung sind aus dem Stand der Technik bekannt, z. B. aus den Dokumenten DE 20 2008 011 308 U1, EP 1 702 829 A2, EP 1 702 829 A1 und EP 2 002 998 B1.

Bei zwei sich gegenüberstehenden Kuppelrahmen kann vorgesehen sein, dass an einem ersten Kuppelrahmen ein Verbindungsmittel ist und an einem zweiten Kuppelrahmen ein Gegenverbindungsmittel angebracht ist, wobei das Verbindungsmittel und das Gegenverbindungsmittel bei einem Zusammenschluss der Kuppelrahmen eine elektrische Verbindung eingehen. Es ist aber auch möglich, an jedem der sich gegenüberstehenden Kuppelrahmen je ein Verbindungsmittel oder je ein Gegenverbindungsmittel anzubringen, wobei eine Brückenleitung Verwendung findet, die vom Durchgangsbereich aus an das Verbindungsmittel oder an das Gegenverbindungsmittel des jeweiligen Kuppelrahmens angeschlossen wird. Insofern ergibt sich mit der erfindungsgemäßen Anordnung der elektrischen Verbindungseinrichtung die Möglichkeit, die elektrische Verbindungseinrichtung zwischen den Fahrzeugteilen manuell zu unterbrechen, obwohl die Kuppelrahmen verbunden bleiben. Weist der Übergang nur einen Balg mit einem stirnseitigen Kuppelrahmen auf, so kann das Verbindungsmittel oder das Gegenverbindungsmittel an der Stirnseite des gegenüberliegenden Fahrzeugteils angebracht sein, während das komplementäre Verbindungsmittel oder Gegenverbindungsmittel an dem Kuppelrahmen angeordnet ist. Auch gemäß dieser Ausführung besteht die Möglichkeit, eine Brückenleitung zu verwenden, wobei die Brückenleitung zwei gleiche Verbindungsmittel und Gegenverbindungsmittel aufweisen kann. Alternativ kann die Brückenleitung auch ein Verbindungsmittel und ein Gegenverbindungsmittel aufweisen.

Der Kuppelrahmen weist erfindungsgemäß zur Durchführung der elektrischen Verbindung von der Außenseite des Kuppelrahmens zur Innenseite wenigstens einen Durchbruch auf, durch den die elektrische Leitung von der Außenseite des Balgs bzw. des Kuppelrahmens zu der Innenseite des Kuppelrahmens geführt ist. Die Durchführung der elektrischen Leitung muss dabei nicht in Form eines sich von außen nach innen fortsetzenden Kabels erfolgen. Es ist auch möglich, das Verbindungsmittel und/oder das Gegenverbindungsmittel direkt an oder in Verbindung mit dem Durchbruch innenseitig oder übergehend zur Innenseite am Kuppelrahmen anzuordnen. Somit wird unter der Hindurchführung der elektrischen Leitung durch den Durchbruch im Kuppelrahmen allgemein die Führung der elektrischen Verbindung von der Außenseite zur Innenseite des Kuppelrahmens verstanden.

Die Innenseite bildet dabei generell die Seite des Kuppelrahmens bzw. des Balges, die den oder zumindest einen Teil des Durchgangsbereichs begrenzt, wobei der Durchgangsbereich der für die Personen begehbare Bereich ist. Die Außenseite des Kuppelrahmens bzw. des Balges bildet den außenseitigen Bereich, der den in der Regel geschlossenen Kuppelrahmen bzw. den Balg umgibt, wobei die elektrischen Leitungen in Form von Kabeln auf der Außenseite geführt sind, während das Verbindungsmittel und/oder das Gegenverbindungsmittel wenigstens teilweise zur Innenseite des Kuppelrahmens hin weist, die dem Durchgangsbereich des Übergangs zugewandt ist.

Gemäß dem wesentlichen Gedanken der Erfindung ist das Verbindungsmittel und/oder das Gegenverbindungsmittel an dem Kuppelrahmen selbst angeordnet, wobei insbesondere die Einstecköffnung des Verbindungsmittels und/oder des Gegenverbindungsmittels in Richtung des Durchgangsbereiches hin orientiert ist. So kann eine Person von dem Durchgangsbereich aus beispielsweise manuell die elektrische Verbindung lösen und wiederherstellen, entweder durch direkte Verbindung des Verbindungsmittels und des Gegenverbindungsmittels oder unter Verwendung einer Brückenleitung.

Gemäß einer Ausführungsform ist die elektrische Leitung außen am Balg zum Kuppelrahmen hin geführt und mit dem Verbindungsmittel und/oder dem Gegenverbindungsmittel auf der dem Durchgangsbereich zugewandten Innenseite des Kuppelrahmens verbunden. Ist der Übergang zwischen zwei Fahrzeugteilen angeordnet, so verbindet die elektrische Leitung das Verbindungsmittel oder das Gegenverbindungsmittel mit dem Fahrzeugteil, wobei die elektrische Leitung wiederum ein Fahrzeugverbindungsmittel aufweisen kann, mit dem die elektrische Leitung mit dem Fahrzeugteil verbunden ist. Damit kann auch der Übergang vollständig vom Fahrzeugteil gelöst werden.

Weist der Übergang zwei Bälge mit jeweiligen stirnseitig angebrachten Kuppelrahmen auf, so erstreckt sich eine erste elektrische Leitung vom ersten Fahrzeugteil zum ersten Kuppelrahmen und eine zweite elektrische Leitung vom zweiten Fahrzeugteil zum zweiten Kuppelrahmen. Mit dem Verbindungsmittel und dem Gegenverbindungsmittel werden die jeweiligen elektrischen Leitungen auf den sich gegenüberliegenden Seiten der verbundenen Kuppelrahmen miteinander elektrisch verbunden. Weist die elektrische Verbindungseinrichtung mehrere elektrische Leitungen auf, so kann jeder elektrischen Leitung ein Verbindungsmittel und/oder ein Gegenverbindungsmittel zugeordnet sein.

Die Erfindung erweist sich als vorteilhaft, wenn neben der Verbindung von Kuppelrahmen mit einem weiteren Kuppelrahmen und/oder eines Fahrzeugteils auch die Verbindung des Verbindungsmittels und des Gegenverbindungsmittels von dem Durchgangsbereich aus lösbar ist. Dadurch ist es möglich für einen Bediener, das Kuppeln des Überganges als auch der elektrischen Verbindungseinrichtung vom Inneren des Fahrzeuges durchzuführen, ohne einen erneuten Standortwechsel durchzuführen.

Weiterhin kann im Rahmen der Erfindung insbesondere die elektrische Verbindungseinrichtung eine Brückenleitung aufweisen, an deren Endbereichen ein Verbindungsmittel und/oder ein Gegenverbindungsmittel angeordnet ist, das mit dem am Kuppelrahmen angeordneten Verbindungsmittel und/oder Gegenverbindungsmittel verbindbar ist. Das Anbringen der Brückenleitung erfolgt dabei insbesondere manuell, und die Herstellung der Verbindung ist dann vorteilhaft möglich, wenn das Verbindungsmittel beziehungsweise das Gegenverbindungsmittel so am Kuppelrahmen angeordnet ist, dass eine Einstecköffnung des Verbindungsmittels oder Gegenverbindungsmittels zum Durchgangsbereich hin orientiert ist. Auch ist es möglich, dass ein Verbindungsmittel oder Gegenverbindungsmittel an einem Endbereich einer elektrischen Leitung fest angebracht ist und in den Durchgangsbereich ragt, sodass eine Person das Verbindungsmittel beziehungsweise das Gegenverbindungsmittel, das an dem Ende der elektrischen Leitung angebracht ist, mit dem Verbindungsmittel oder Gegenverbindungsmittel verbindet, das am Kuppelrahmen angeordnet ist.

Zur Durchführung der elektrischen Verbindung von der Außenseite zu der Innenseite des Kuppelrahmens kann ein Flanschelement am oder im Bereich eines Durchbruches in dem Kuppelrahmen auf der Außenseite an dem Kuppelrahmen wenigstens unterstützend dienen. Auf gleiche Weise kann ein Flanschelement alternativ oder zusätzlich auf der Innenseite am Kuppelrahmen angeordnet sein. Mittels des Flanschelementes kann die elektrische Leitung von der Außenseite zu der Innenseite des Kuppelrahmens geführt sein. Insbesondere kann das Flanschelement die elektrische Leitung auf der Außenseite stabilisieren und/oder befestigen und/oder führen.

Die elektrische Verbindungseinrichtung weist beispielsweise genau eine, zwei, drei oder vorzugsweise vier oder mehr elektrische Leitungen auf, die mittels nebeneinander angeordneter Durchbrüche den Kuppelrahmen von der Außenseite zur Innenseite durchstoßen. Sind alternativ an den Durchbrüchen bereits die Verbindungsmittel und/oder Gegenverbindungsmittel angebracht, so führen die jeweiligen elektrischen Leitungen zu den Verbindungsmitteln oder Gegenverbindungsmitteln in Anordnung an oder im Bereich der Durchbrüche. Dabei kann jeder elektrischen Leitung ein Verbindungsmittel und ein Gegenverbindungsmittel zugeordnet sein.

Die Erfindung richtet sich zum einen auf die Ausführung von Übergängen mit nur einem Balg, wobei der Kuppelrahmen an der Stirnseite des gegenüberliegenden Fahrzeugteils angebracht wird. Die Erfindung richtet sich zum anderen auf Übergänge, die zwei (oder auch mehr) Bälge mit jeweils stirnseitig angeordneten Kuppelrahmen aufweisen. So kann vorgesehen sein, dass ein am ersten Fahrzeugteil anordenbarer erster Balg mit einem ersten stirnseitig an dem Balg vorhandenen Kuppelrahmen vorgesehen ist und, dass ein am zweiten Fahrzeugteil anordenbarer zweiter Balg mit einem zweiten stirnseitig an dem Balg vorhandenen Kuppelrahmen vorgesehen ist, wobei an dem ersten Kuppelrahmen das Verbindungsmittel und an dem zweiten Kuppelrahmen das Gegenverbindungsmittel angeordnet ist. Alternativ sind an den sich gegenüberstehenden Kuppelrahmen jeweilige Verbindungsmittel oder jeweilige Gegenverbindungsmittel angeordnet, und es kommt eine Brückenleitung zum Einsatz, um die sich gegenüberliegenden Verbindungsmittel und Gegenverbindungsmittel miteinander zu verbinden.

Die Erfindung umfasst Übergänge, bei denen der erste und der zweite Kuppelrahmen miteinander verbindbar sind, wobei dabei das Verbindungsmittel und das Gegenverbindungsmittel so an dem ersten und dem zweiten Kuppelrahmen angeordnet sind, dass sich das Verbindungsmittel und das Gegenverbindungsmittel elektrisch verbinden oder diese verbindbar sind, wenn die Kuppelrahmen miteinander verbunden werden. Dabei kann das Verbindungsmittel oder Gegenverbindungsmittel auch manuell lösbar am Kuppelrahmen angeordnet sein, um auch bei dieser Ausführung die elektrische Verbindung zwischen den Fahrzeugteilen zu unterbrechen, wenn der erste und der zweite Kuppelrahmen miteinander verbunden bleiben.

Alternativ zum Übergang mit zwei Bälgen und stirnseitig angeordneten jeweiligen Kuppelrahmen kann der Übergang nur einen an einem ersten Fahrzeugteil anordenbaren Balg mit einem Kuppelrahmen aufweisen, der zur Verbindung mit der Stirnseite des zweiten Fahrzeugteils ausgebildet ist, wobei das Verbindungsmittel oder das Gegenverbindungsmittel am Kuppelrahmen angeordnet ist und das jeweils andere Mittel zur Anordnung an der Stirnseite des zweiten Fahrzeugteils ausgebildet ist.

Mit besonderem Vorteil ist die elektrische Verbindungseinrichtung in einem Deckenabschnitt des Kuppelrahmens angeordnet. Mit weiterem Vorteil weist die elektrische Verbindungseinrichtung eine zum Durchgangsbereich orientierte Schutzabdeckung auf. Insbesondere sind die elektrischen Leitungen auf der Oberseite des Übergangs, insbesondere oberseitig von dem wenigstens einen oder beiden Bälgen geführt, um die Verbindungsmittel mit den Fahrzeugteilen elektrisch zu verbinden.

Neben der Anordnung in einem Deckenabschnitt kann auch eine Anordnung in einem Seitenabschnitt oder Bodenabschnitt realisiert werden. Dabei kann eine Anordnung im Seitenbereich besonders vorteilhaft sein, wenn die elektrischen Leitungen bereits im Wagenkaste in einem Seitenbereich angeordnet sind. Dadurch wird eine unnötig lange elektrische Leitung verhindert. Zudem ergibt sich bei einer Anordnung im Seitenbereich die vorteilhafte Möglichkeit auf die Schutzabdeckung zu verzichten, da die elektrische Verbindungseinrichtung hinter der vorhandenen Seitenwand oder einer Bodenabdeckung angeordnet werden kann.

Die Erfindung richtet sich weiterhin auf ein Fahrzeug mit zwei beweglich miteinander verbundenen Fahrzeugteilen aufweisend einen Übergang gemäß vorstehender Beschreibung.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einer Verbindungseinrichtung die Rede ist, so ist dies so zu verstehen, dass genau eine Verbindungseinrichtung, zwei Verbindungseinrichtungen oder mehrere Verbindungseinrichtungen vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: eine perspektivische Ansicht eines Übergangs mit zwei Bälgen, wobei der Übergang eine elektrische Verbindungseinrichtung aufweist, die am Kuppelrahmen angeordnet ist,
- Fig. 2: eine Detailansicht der Anordnung der elektrischen Verbindungseinrichtung am Kuppelrahmen,
- Fig. 3: eine Seitenansicht des Übergangs mit einem ersten und einem zweiten Balg und stirnseitig angebrachten Kuppelrahmen sowie der elektrischen Verbindungseinrichtung auf den jeweiligen Seiten des Balges beziehungsweise der Kuppelrahmen,
- Fig. 4: eine Detailansicht der elektrischen Verbindungseinrichtung im Bereich von zwei miteinander verbundenen Kuppelrahmen und
- Fig. 5: eine Detailansicht des Kuppelrahmens in stirnseitiger Anordnung am Balg mit im Kuppelrahmen eingebrachten Durchbrüchen zur Hindurchführung der elektrischen Verbindung der Verbindungseinrichtung.

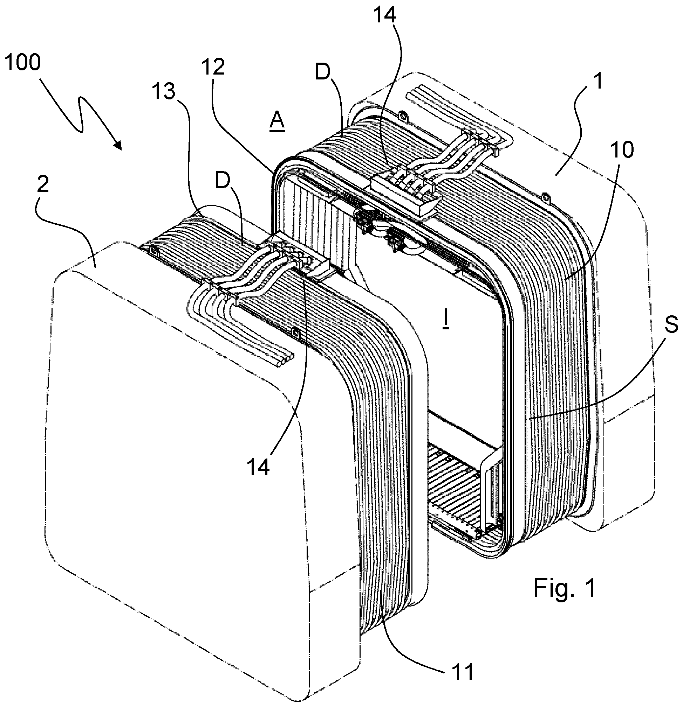

Figur 1 zeigt in einer perspektivischen Ansicht einen Übergang 100 in Anordnung zwischen einem ersten Fahrzeugteil 1 und einem zweiten Fahrzeugteil 2, die gemeinsam Teile eines Busses oder vorzugsweise eines Schienenfahrzeuges bilden. Der Übergang 100 ist in einer getrennten Darstellung gezeigt. Am ersten Fahrzeugteil 1 ist ein erster Balg 10 mit einem ersten stirnseitigen Kuppelrahmen 12 angeordnet und am zweiten Fahrzeugteil 2 ist ein zweiter Balg 11 mit einem komplementär ausgeführten zweiten Kuppelrahmen 13 angeordnet. Durch die getrennte Anordnung stehen sich die Kuppelrahmen 12, 13 beabstandet gegenüber und die Kuppelrahmen 12, 13 können bei einem Zusammenfahren der Fahrzeugteile 1, 2 miteinander verbunden werden.

An den Kuppelrahmen 12, 13 sind Bestandteile einer elektrischen Verbindungseinrichtung 14 angeordnet, wobei die Anordnung im Deckenabschnitt D des Übergangs 100 eingerichtet ist. Anders als in den Figuren dargestellt, kann die Verbindungseinrichtung 14 auch in einem Seitenabschnitt S des Übergangs 100 bzw. des Kuppelrahmens 12, 13 angeordnet sein.

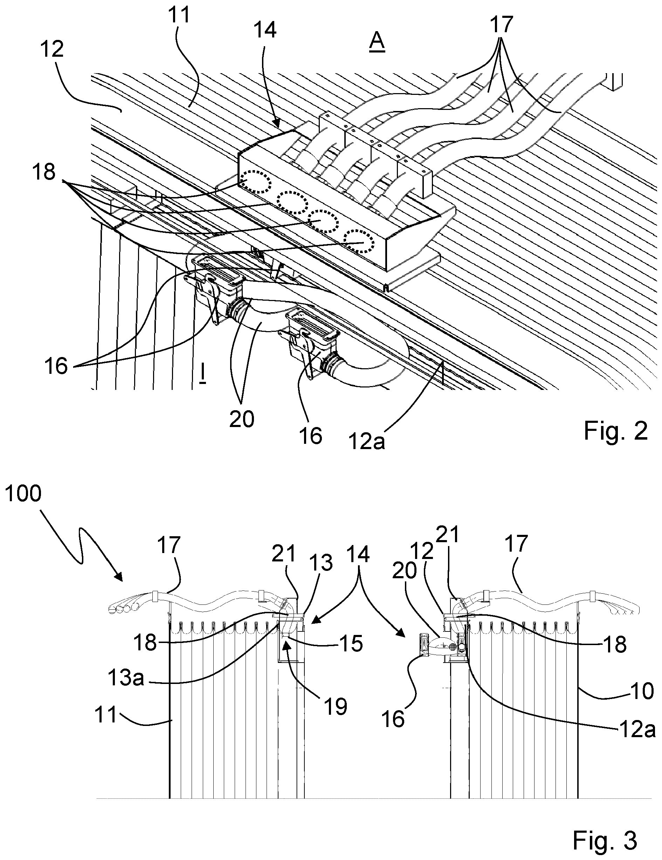

Figur 2 zeigt eine Detaildarstellung der elektrischen Verbindungseinrichtung 14 am Beispiel des ersten Kuppelrahmens 12 in Anordnung am ersten Balg 11. Die elektrische Verbindungseinrichtung 14 weist elektrische Leitungen 17 auf, die beispielhaft in 4-facher Anordnung gezeigt sind. Die elektrischen Leitungen 17 verbinden die elektrische Verbindungseinrichtung 14 mit dem Fahrzeugteil, an dem der Balg 11 angebracht ist. Erfindungsgemäß werden die elektrischen Leitungen 17 von der Außenseite A des Balges 10 und damit auch des Kuppelrahmens 12 zur Innenseite 12a des Kuppelrahmens 12 geführt, wobei die Innenseite 12a des Kuppelrahmens 12 zum Durchgangsbereich I des Übergangs 100 hin orientiert ist. Die Innenseite 12a des Kuppelrahmens 12 umgrenzt dabei den Durchgangsbereich I. Unter der Außenseite A wird der außenseitige Bereich des Kuppelrahmens 12 bzw. des Balgs 11 verstanden.

Zum Durchgangsbereich I hin orientiert sind beispielhaft zwei Brückenleitungen 20 gezeigt, an deren freien Endseiten Gegenverbindungsmittel 16 angeordnet sind. Innenseitig des Kuppelrahmens 12 sind an dessen Innenseite 12a entsprechende Verbindungsmittel angebracht, die aufgrund der perspektivischen Darstellung nicht sichtbar sind. In diese Verbindungsmittel werden die Gegenverbindungsmittel 16 eingesteckt, wobei das Verbinden und Lösen der Brückenleitungen 20 vom Durchgangsbereich I auf einfache Weise durch eine Person manuell ausgeführt werden kann.

Zur Durchführung der elektrischen Leitungen 17 dient ein Flanschelement 21, das außenseitig am Kuppelrahmen 12 angebracht ist. Die weitere Figur 3 zeigt verbessert die Anordnung der Verbindungsmittel und Gegenverbindungsmittel der elektrischen Verbindungseinrichtung in einer seitlichen Ansicht.

Figur 3 stellt den Übergang 100 mit dem Balg 10 und dem Balg 11 sowie den endseitig angeordneten Kuppelrahmen 12, 13 in einer Seitenansicht dar. Dabei wird deutlich, dass die elektrischen Leitungen 17 zu der elektrischen Verbindungseinrichtung 14 geführt sind. Über die Flansche 21 werden die elektrischen Leitungen 17 in den Durchgangsbereich I auf die Innenseite 12a des Kuppelrahmens 12 beziehungsweise die Innenseite 13a des Kuppelrahmens 13 geführt. Am Ende der elektrischen Leitung 17 befindet sich das Verbindungsmittel 15, wobei in Anordnung am Kuppelrahmen 13 das Verbindungsmittel 15 eine in den Durchgangsbereich I orientierte Einstecköffnung 19 aufweist. Auf der rechten Seite ist an dem Verbindungsmittel 15 das Gegenverbindungsmittel 16 angeordnet, das an der Brückenleitung 20 angebracht ist. Am weiteren freien Ende der Brückenleitung 20 ist ein weiteres Gegenverbindungsmittel 16 angeordnet, das bei einem Zusammenschluss der Kuppelrahmen 12, 13 in die Einstecköffnung 19 des Verbindungsmittels 15 am Kuppelrahmen 13 eingesteckt werden kann. So kann bei einem Schließen der Kuppelrahmen 12, 13 aufeinander eine elektrische Verbindung mittels der Brückenleitung 20 hergestellt werden. Die Verbindungsmittel 15 sind dabei auf der Innenseite 12a des Kuppelrahmens 12 angeordnet, wobei die Montage alternativ oder zusätzlich auch über das Flanschelement 21 erfolgen kann. Entsprechende Durchbrüche 18 ermöglichen dabei die Hindurchführung der elektrischen Leitung durch den Kuppelrahmen 12, 13.

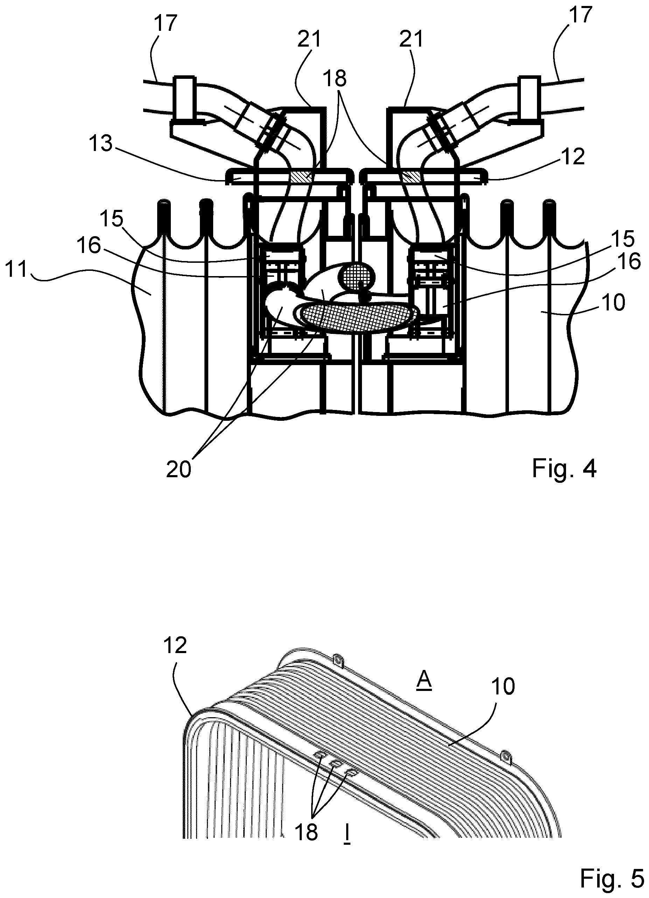

Figur 4 zeigt in einer vergrößerten Ansicht die Verbindungseinrichtung 14 mit den elektrischen Leitungen 17, die über die Flanschelemente 21 durch den Kuppelrahmen 12, 13 zur Innenseite geführt werden, und die elektrischen Leitungen 17 münden in den auf der Innenseite 12a und 13a der Kuppelrahmen 12, 13 angeordneten Verbindungsmitteln 15. Die Verbindungsmittel 16 an der Brückenleitung 20 sind jeweils mit den Verbindungsmitteln 15 gekoppelt. So kann bei einem Zusammenschluss der Kuppelrahmen 12, 13 in stirnseitiger Anordnung am ersten Balg 10 und am zweiten Balg 11 mit der Brückenleitung 20 die elektrische Verbindung hergestellt werden.

Dabei ist gezeigt, dass im Bereich der Anordnung des Flanschelementes 21 die Durchbrüche 18 in den Kuppelrahmen 12, 13 eingebracht sind, durch die hindurch die elektrische Leitung 17 geführt ist. Zum Schutz vor Manipulation und Verunreinigungen sowie aus optischen Gründen weist die elektrische Verbindungseinrichtung 14 eine Schutzabdeckung 22 auf, die zum Durchgangsbereich I hin orientiert ist und die Verbindungsmittel 15, die Gegenverbindungsmittel 16 und die Brückenleitung 20 einhaust.

Figur 5 zeigt schließlich eine perspektivische Ansicht eines Balgs 10 mit einem endseitigen Kuppelrahmen 12, in den oberseitig beispielhaft drei Durchbrüche 18 eingebracht sind. So kann die elektrische Leitung der elektrischen Verbindungseinrichtung 14 gemäß Figur 4 von der Außenseite A in den Durchgangsbereich I auf der Innenseite 12a des Kuppelrahmens 12 überführt werden.

Die Erfindung beschränkt sich in ihrer Ausführung nicht auf das vorstehend angegebene bevorzugte Ausführungsbeispiel. Vielmehr wird die Erfindung nur durch den Umfang der beigefügten Ansprüche begrenzt.

### Bezugszeichenliste:

- 1: Fahrzeugteil
- 2: Fahrzeugteil

- 10: Balg
- 11: Balg
- 12: Kuppelrahmen
- 12a: Innenseite des Kuppelrahmens
- 13: Kuppelrahmen
- 13a: Innenseite des Kuppelrahmens
- 14: elektrische Verbindungseinrichtung
- 15: Verbindungsmittel
- 16: Gegenverbindungsmittel
- 17: elektrische Leitung
- 18: Durchbruch
- 19: Einstecköffnung
- 20: Brückenleitung
- 21: Flanschelement
- 22: Schutzabdeckung

- 100: Übergang

- A: Außensite
- I: Durchgangsbereich
- S: Seitenabschnitt
- D: Deckenabschnitt

## Patentansprüche

1. Übergang (100) zur Anordnung zwischen zwei beweglich miteinander verbundenen Fahrzeugteilen (1, 2), insbesondere eines Busses oder eines Schienenfahrzeugs, aufweisend
- wenigstens einen an einen Fahrzeugteil (1, 2) anordenbaren Balg (10, 11), der einen Durchgangsbereich (I) definiert und an dem stirnseitig ein Kuppelrahmen (12, 13) angeordnet ist, und
- wenigstens eine elektrische Verbindungseinrichtung (14) mit wenigstens einem Verbindungsmittel (15) und wenigstens einem Gegenverbindungsmittel (16) zur lösbaren elektrischen Verbindung der beiden Fahrzeugteile (1, 2), sowie mit wenigstens einer elektrischen Leitung (17), wobei
- das Verbindungsmittel (15) und/oder das Gegenverbindungsmittel (16) auf einer dem Durchgangsbereich (I) zugewandten Innenseite (12a, 13a) des Kuppelrahmens (12, 13) angeordnet sind/ist,
**dadurch gekennzeichnet, dass**
der Kuppelrahmen (12, 13) wenigstens einen Durchbruch (18) aufweist, durch den die elektrische Leitung (17) von einer/der Außenseite (A) zu der Innenseite (12a, 13a) des Kuppelrahmens (12, 13) geführt ist.

2. Übergang (100) nach Anspruch 1,
**dadurch gekennzeichnet, dass**
die elektrische Leitung (17) auf einer Außenseite (A) des Balges (10, 11) zu dem Kuppelrahmen (12, 13) hin geführt ist und mit dem Verbindungsmittel (15) und/oder dem Gegenverbindungsmittel (16) auf der dem Durchgangsbereich (I) zugewandten Innenseite (12a, 13a) des Kuppelrahmens (12, 13) verbunden ist.

3. Übergang (100) nach einem der Ansprüche 1 oder 2,
**dadurch gekennzeichnet, dass**
sowohl die Verbindung von Kuppelrahmen (12) und einem weiteren Kuppelrahmen (13) und/oder eines Fahrzeugteils (1,2) als auch die Verbindung des Verbindungsmittels (15) und des Gegenverbindungsmittels (16) von dem Durchgangsbereich (I) aus lösbar sind.

4. Übergang (100) nach einem der vorhergehenden Ansprüche,
**dadurch gekennzeichnet, dass**
die elektrische Verbindungseinrichtung (14) wenigstens eine Brückenleitung (20) aufweist, an deren Endbereichen ein Verbindungsmittel (15) und/oder ein Gegenverbindungsmittel (16) angeordnet ist, das mit dem an dem Kuppelrahmen (12, 13) angeordneten Verbindungsmittel (15) und/oder Gegenverbindungsmittel (16) verbindbar ist.

5. Übergang (100) nach einem der vorhergehenden Ansprüche,
**dadurch gekennzeichnet, dass**
am oder im Bereich des Durchbruches (18) auf einer/der Außenseite (A) ein Flanschelement (21) an dem Kuppelrahmen (12, 13) angeordnet ist, durch das die elektrische Leitung (17) von der Außenseite (A) zu der Innenseite (12a, 13a) des Kuppelrahmens (12, 13) geführt ist und/oder mittels dem die elektrische Leitung (17) auf der Außenseite (A) stabilisiert ist.

6. Übergang (100) nach einem der vorhergehenden Ansprüche,
**dadurch gekennzeichnet, dass**
die elektrische Verbindungseinrichtung (14) zwei, drei oder vorzugsweise vier oder mehr elektrische Leitungen (17) aufweist, die mittels nebeneinander angeordneter Durchbrüche (18) den Kuppelrahmen (12, 13) von der Außenseite (A) zu der Innenseite (12a, 13a) durchstoßen.

7. Übergang (100) nach einem der vorhergehenden Ansprüche,
**dadurch gekennzeichnet, dass**
- ein am ersten Fahrzeugteil (1) anordenbarer erster Balg (10) mit einem ersten stirnseitig an dem Balg (10) vorhandenen Kuppelrahmen (12) vorgesehen ist und
- ein am zweiten Fahrzeugteil (2) anordenbarer zweiter Balg (11) mit einem zweiten stirnseitig an dem Balg (11) vorhandenen Kuppelrahmen (13) vorgesehen ist,
wobei an dem ersten Kuppelrahmen (12) das Verbindungsmittel (15) und an dem zweiten Kuppelrahmen (13) das Gegenverbindungsmittel (16) angeordnet ist.

8. Übergang (100) nach Anspruch 7,
**dadurch gekennzeichnet, dass**
der erste und der zweite Kuppelrahmen (12, 13) miteinander verbindbar ausgebildet sind, wobei das Verbindungsmittel (15) und das Gegenverbindungsmittel (16) so an dem ersten und dem zweiten Kuppelrahmen (12, 13) angeordnet sind, dass sich das Verbindungsmittel (15) und das Gegenverbindungsmittel (16) elektrisch verbinden oder verbindbar sind, wenn die Kuppelrahmen (12, 13) miteinander verbunden werden.

9. Übergang (100) nach einem der vorhergehenden Ansprüche,
**dadurch gekennzeichnet, dass**
der Übergang (100) nur einen Balg (10) aufweist, der am ersten Fahrzeugteil (1) anordenbar ist und der einen Kuppelrahmen (12) aufweist zur Verbindung mit der Stirnseite des zweiten Fahrzeugteils (2), wobei das Verbindungsmittel (15) oder das Gegenverbindungsmittel (16) an dem Kuppelrahmen (12) angeordnet ist und das jeweils andere Mittel (15, 16) zur Anordnung an der Stirnseite des zweiten Fahrzeugteils (2) ausgebildet ist.

10. Übergang (100) nach einem der vorhergehenden Ansprüche,
**dadurch gekennzeichnet, dass**
- die elektrische Verbindungseinrichtung (14) in einem Deckenabschnitt (D) des Kuppelrahmens (12, 13) angeordnet ist und/oder
- die elektrische Verbindungseinrichtung (14) eine zum Durchgangsbereich (I) orientierte Schutzabdeckung (22) aufweist.

11. Fahrzeug mit zwei beweglich miteinander verbundenen Fahrzeugteilen (1, 2), zwischen den ein Übergang (100) gemäß einem der Ansprüche 1 bis 10 angeordnet ist.

## Claims

1. Gangway (100) for arrangement between two movably connected vehicle parts (1, 2), in particular of a bus or a railway vehicle, having
- at least one bellows (10, 11) which can be arranged on a vehicle part (1, 2) and defines a transit area (I), and on the end face of which a coupling frame (12, 13) is arranged, and
- at least one electrical connection device (14) having at least one connection element (15) and at least one counter connection element (16) for detachably electrically connecting the two vehicle parts (1, 2), and having at least one electrical line (17),
- the connection element (15) and/or the counter connection element (16) being arranged on an inner side (12a, 13a) of the coupling frame (12, 13) which faces the transit area (I),
**characterized in that**
the coupling frame (12, 13) has at least one opening (18) through which the electrical line (17) is guided from an/the outer side (A) to the inner side (12a, 13a) of the coupling frame (12, 13).

2. Gangway (100) according to claim 1,
**characterized in that**
the electrical line (17) is guided on an outer side (A) of the bellows (10, 11) towards the coupling frame (12, 13) and is connected to the connection element (15) and/or the counter connection element (16) on the inner side (12a, 13a) of the coupling frame (12, 13) which faces the transit area (I).

3. Gangway (100) according to either of claims 1 and 2,
**characterized in that**
both the connection of the coupling frame (12) and of a further coupling frame (13) and/or of a vehicle part (1, 2) as well as the connection of the connection element (15) and of the counter connection element (16) can be detached from the transit area (I).

4. Gangway (100) according to any of the preceding claims,
**characterized in that**
the electrical connection device (14) has at least one bridge line (20), on the end regions of which a connection element (15) and/or a counter connection element (16) is arranged, which connection element and/or counter connection element can be connected to the connection element (15) and/or counter connection element (16) arranged on the coupling frame (12, 13).

5. Gangway (100) according to any of the preceding claims,
**characterized in that**
at or in the region of the opening (18) on a/the outer side (A), a flange element (21) is arranged on the coupling frame (12, 13), through which flange element the electrical line (17) is guided from the outer side (A) to the inner side (12a, 13a) of the coupling frame (12, 13), and/or by means of which flange element the electrical line (17) is stabilized on the outer side (A).

6. Gangway (100) according to any of the preceding claims,
**characterized in that**
the electrical connection device (14) has two, three or preferably four or more electrical lines (17) which penetrate the coupling frame (12, 13) from the outer side (A) to the inner side (12a, 13a) via openings (18) arranged next to one another.

7. Gangway (100) according to any of the preceding claims,
**characterized in that**
- a first bellows (10) which can be arranged on the first vehicle part (1) is provided with a first coupling frame (12) present on the end face of the bellows (10), and
- a second bellows (11) which can be arranged on the second vehicle part (2) is provided with a second coupling frame (13) present on the end face of the bellows (11),
the connection element (15) being arranged on the first coupling frame (12) and the counter connection element (16) being arranged on the second coupling frame (13).

8. Gangway (100) according to claim 7,
**characterized in that**
the first and the second coupling frame (12, 13) are designed to be connectable to one another, the connection element (15) and the counter connection element (16) being arranged on the first and the second coupling frame (12, 13) such that the connection element (15) and the counter connection element (16) are or can be electrically connected when the coupling frames (12, 13) are connected to one another.

9. Gangway (100) according to any of the preceding claims,
**characterized in that**
the gangway (100) has only one bellows (10), which can be arranged on the first vehicle part (1) and which has a coupling frame (12) for connection to the end face of the second vehicle part (2), the connection element (15) or the counter connection element (16) being arranged on the coupling frame (12) and the relevant other means (15, 16) being designed to be arranged on the end face of the second vehicle part (2).

10. Gangway (100) according to any of the preceding claims,
**characterized in that**
- the electrical connection device (14) is arranged in a cover portion (D) of the coupling frame (12, 13) and/or
- the electrical connection device (14) has a protective cover (22) oriented towards the transit area (I).

11. Vehicle having two movably connected vehicle parts (1, 2), between which a gangway (100) according to any of claims 1 to 10 is arranged.

## Revendications

1. Élément de jonction (100) à disposer entre deux parties de véhicule (1, 2) reliées entre elles de manière mobile, en particulier d'un bus ou d'un véhicule ferroviaire, présentant
- au moins un soufflet (10, 11) pouvant être disposé au niveau d'une partie de véhicule (1, 2), lequel soufflet définit une zone de passage (I) et au niveau duquel un cadre en dôme (12, 13) est disposé sur le côté frontal, et
- au moins un dispositif de connexion électrique (14) comportant au moins un moyen de connexion (15) et au moins un moyen de connexion complémentaire (16) pour la connexion électrique amovible des deux parties du véhicule (1, 2), et comportant au moins une ligne électrique (17),
- le moyen de connexion (15) et/ou le moyen de connexion complémentaire (16) sont/est disposé(s) sur un côté intérieur (12a, 13a) du cadre en dôme (12, 13) orienté vers la zone de passage (I),
**caractérisé en ce que**
le cadre en dôme (12, 13) présente au moins une ouverture de passage (18) à travers laquelle la ligne électrique (17) est acheminée d'un/du côté extérieur (A) vers le côté intérieur (12a, 13a) du cadre en dôme (12, 13).

2. Élément de jonction (100) selon la revendication 1,
**caractérisé en ce que**
la ligne électrique (17) est acheminée sur un côté extérieur (A) du soufflet (10, 11) vers le cadre en dôme (12, 13) et est reliée au moyen de connexion (15) et/ou au moyen de connexion complémentaire (16) sur le côté intérieur (12a, 13a) du cadre en dôme (12, 13) orienté vers la zone de passage (I).

3. Élément de jonction (100) selon l'une des revendications 1 ou 2, **caractérisé en ce**
**qu'**aussi bien la connexion du cadre en dôme (12) et d'un autre cadre en dôme (13) et/ou d'une partie de véhicule (1, 2) que la connexion du moyen de connexion (15) et du moyen de connexion complémentaire (16) sont détachables à partir de la zone de passage (I).

4. Élément de jonction (100) selon l'une quelconque des revendications précédentes,
**caractérisé en ce que**
le dispositif de connexion électrique (14) présente au moins une ligne de pontage (20), au niveau des zones d'extrémité de laquelle un moyen de connexion (15) est disposé et/ou un moyen de connexion complémentaire (16), pouvant être connecté au moyen de connexion (15) et/ou au moyen de connexion complémentaire (16) disposé au niveau du cadre en dôme (12, 13).

5. Élément de jonction (100) selon l'une quelconque des revendications précédentes,
**caractérisé en ce que**
sur le cadre en dôme (12, 13) au niveau de la zone de l'ouverture de passage (18) ou dans celle-ci sur un/le côté extérieur (A), un élément de bride (21) est disposé, la ligne électrique (17) étant acheminée du côté extérieur (A) vers le côté intérieur (12a, 13a) du cadre en dôme (12, 13) à travers ledit élément de bride et/ou la ligne électrique (17) étant stabilisée sur le côté extérieur (A) au moyen dudit élément de bride.

6. Élément de jonction (100) selon l'une quelconque des revendications précédentes,
**caractérisé en ce que**
le dispositif de connexion électrique (14) comporte deux, trois ou de préférence quatre lignes électriques (17) ou plus qui traversent le cadre en dôme (12, 13) par les ouvertures de passage (18) disposées de manière adjacente, du côté extérieur (A) vers le côté intérieur (12a, 13a).

7. Élément de jonction (100) selon l'une quelconque des revendications précédentes,
**caractérisé en ce que**
- un premier soufflet (10) pouvant être disposé au niveau de la première partie de véhicule (1) est prévu, lequel premier soufflet comporte un premier cadre en dôme (12) présent sur le côté frontal dudit soufflet (10) et **en ce**
- **qu'**un second soufflet (11) pouvant être disposé au niveau de la seconde partie de véhicule (2) est prévu, lequel second soufflet comporte un second cadre en dôme (13) présent sur le côté frontal dudit soufflet (11),
le moyen de connexion (15) étant disposé au niveau du premier cadre en dôme (12) et le moyen de connexion complémentaire (16) étant disposé au niveau du second cadre en dôme (13).

8. Élément de jonction (100) selon la revendication 7,
**caractérisé en ce que**
les premier et second cadres en dôme (12, 13) sont réalisés de manière à pouvoir être connectés l'un à l'autre, le moyen de connexion (15) et le moyen de connexion complémentaire (16) étant disposés au niveau des premier et second cadres de dôme (12, 13) de telle sorte que le moyen de connexion (15) et le moyen de connexion complémentaire (16) se connectent ou peuvent se connecter électriquement lorsque les cadres en dôme (12, 13) sont connectés l'un à l'autre.

9. Élément de jonction (100) selon l'une quelconque des revendications précédentes,
**caractérisé en ce que**
la passerelle (100) ne comporte qu'un soufflet (10) qui peut être disposé au niveau de la première partie de véhicule (1) et qui comporte un cadre en dôme (12) pour la connexion avec le côté frontal de la seconde partie de véhicule (2), le moyen de connexion (15) ou le moyen de connexion complémentaire (16) étant disposé au niveau du cadre en dôme (12) et l'autre moyen respectif (15, 16) étant conçu pour être disposé sur le côté frontal de la seconde partie de véhicule (2).

10. Élément de jonction (100) selon l'une quelconque des revendications précédentes,
**caractérisé en ce que**
- le dispositif de connexion électrique (14) est disposé dans une section de plafond (D) du cadre en dôme (12, 13) et/ou
- le dispositif de connexion électrique (14) comporte un capot de protection (22) orienté vers la zone de passage (I).

11. Véhicule comportant deux parties de véhicule (1, 2) reliées entre elles de manière mobile, un élément de jonction (100) selon l'une des revendications 1 à 10 étant disposé entre lesdites deux parties de véhicule.
